# EUROPEAN PATENT SPECIFICATION

(11) **EP 3 760 523 B1**
(45) Date of publication and mention of the grant of the patent: **12.10.2022**
(21) Application number: 18908146.6
(22) Date of filing: 28.02.2018
(51) Int. Cl.: B62J 9/24, B62J 9/00, B62J 9/23, B62J 9/27, B62J 9/30

(54) **ADDITIONAL STORAGE COMPARTMENT STRUCTURE FOR SADDLED VEHICLE**
ZUSATZSTAUFACHSTRUKTUR FÜR SATTELFAHRZEUG
STRUCTURE DE COMPARTIMENT DE STOCKAGE SUPPLÉMENTAIRE POUR VÉHICULE À SELLE

(43) Date of publication of application: 06.01.2021
(73) Proprietor: HONDA MOTOR CO., LTD., Minato-ku Tokyo 107-8556 (JP)
(72) Inventor: NAKAMURA, Takuro, Wako-shi, Saitama 351-0193 (JP); HOSOYA, Takumi, Wako-shi, Saitama 351-0193 (JP); HASUNUMA, Ryo, Chiyoda-ku, Tokyo 102-0083 (JP); YAZAWA, Masahiro, Haga-gun, Tochigi 321-3321 (JP)
(74) Representative: Dehns
(86) International application number: PCT/JP2018/007643
(87) International publication number: WO 2019/167196

(56) References cited:
- EP-A1- 2 500 246
- CN-Y- 2 672 227
- DE-C1- 4 302 949
- JP-A- 2007 321 470
- JP-A- 2010 105 616
- JP-A- 2014 000 909
- JP-A- 2016 068 766
- US-A1- 2003 150 894

## Description

### Technical Field

The present invention relates to an additional storage compartment structure for saddled vehicle.

### Background Art

Heretofore, some additional storage compartments attached afterward to a saddled vehicle have been known which are much less prone to tampering with an electric wire from outside by a third person (for examine, see Patent Literature 1).

DE 4302949 C1, which shows the preamble of claim 1, discloses an example of a container that can be fitted to a motorcycle.

### Citation List

### Patent Literature

Patent Literature 1: Japanese Patent No. 6113129

### Summary of Invention

### Technical Problem

Patent Literature 1 discloses an additional storage compartment coupled with a smart key, but does not disclose a mounting and removing structure of the additional storage compartment to a vehicle body or an opening and closing structure of the additional storage compartment. When the mounting and removing structure of the additional storage compartment and the opening and closing structure thereof are separated, it is difficult to utilize a limited storage space of a saddled vehicle. Furthermore, also in the additional storage compartment, it is desirable to provide a locking structure having a high anti-theft effect.

An object of the present invention is to provide an additional storage compartment structure for saddled vehicle, in which a limited storage space is sufficiently utilized to achieve compactness and which comprises a locking structure having a high anti-theft effect.

### Solution to Problem

The present invention provides an additional storage compartment structure for a saddled vehicle, the additional storage compartment structure being provided with an additional storage compartment mountable on and removable from a vehicle body, the additional storage compartment structure for saddled vehicle, wherein the additional storage compartment comprises a handle changeable between a stored state and a use state, and a keyhole in which a key is inserted to lock against opening and closing, the additional storage compartment comprises a storage compartment mounting and removing mechanism that allows mounting on and removing from the vehicle body, the storage compartment mounting and removing mechanism comprises a disengagement operating section that disengages the additional storage compartment from the vehicle body, when the key is inserted in the keyhole and turned, the storage compartment mounting and removing mechanism is unlocked, and when the key is inserted in the keyhole and the key is turned in a direction opposite to an unlocked direction of the storage compartment mounting and removing mechanism in a state where the additional storage compartment is mounted on the vehicle body, the storage compartment mounting and removing mechanism is locked characterized in that the keyhole is arranged to be covered with the handle in the stored state and the storage compartment mounting and removing mechanism is provided so that the disengagement operating section is covered with the handle in the stored state from a vehicle rear side.

In the above invention, the additional storage compartment may comprise an opening and closing mechanism, the opening and closing mechanism may comprise a locking member that locks an opening and closing section of the additional storage compartment in a closed state, a link member that locks the locking member, and an operating section that is abuttable on the link member, and the link member may be separated from the locking member to open the opening and closing section.

### Advantageous Effects of Invention

According to the present invention, an additional storage compartment comprises a handle changeable between a stored state and a use state, and a keyhole in which a key is inserted to lock against opening and closing, the keyhole is arranged to be covered with the handle in the stored state, the additional storage compartment comprises a storage compartment mounting and removing mechanism that is mountable on and removable from a vehicle body, and when the key is inserted in the keyhole and turned, the storage compartment mounting and removing mechanism is unlocked, and when the key is inserted in the keyhole and the key is turned in a direction opposite to an unlocked direction of the storage compartment mounting and removing mechanism in a state where the additional storage compartment is mounted on the vehicle body, the storage compartment mounting and removing mechanism is locked. Consequently, the keyhole is covered with the handle, so that an anti-theft effect can be enhanced without compromising user's usability.

In an embodiment of the above invention, the additional storage compartment comprises an opening and closing mechanism, the opening and closing mechanism comprises a locking member that locks an opening and closing section of the additional storage compartment in a closed state, a link member that locks the locking member, and an operating section that is abuttable on the link member, and the link member is separated from the locking member to open the opening and closing section. Consequently, since the link member is separated from the locking member, the operating section presses the link member to separate the link member from the locking member. Alternatively, the link member is separated from the locking member without using the operating section, so that the opening and closing section can be opened. The opening and closing mechanism can be compact, and a degree of freedom in setting the opening and closing mechanism can increase. In consequence, an opening and closing operation can be selected in accordance with a vehicle mounted state or a non-vehicle mounted state of the additional storage compartment, a vehicle type or the like, and the usability can be improved.

### Brief Description of Drawings

[Figure 1] Figure 1 is a left side view showing a motorcycle comprising an additional storage compartment structure according to the present invention.
[Figure 2] Figure 2 is a perspective view showing a top box and a surrounding thereof.
[Figure 3] Figure 3 is a perspective view of a top box in which a handle is set to a use state and the surrounding thereof.
[Figure 4] Figure 4 is a perspective view showing a rear and bottom of the top box.
[Figure 5] Figure 5 is a cross-sectional view showing a rear of a rear carrier and the rear of the top box.
[Figure 6] Figure 6 is a left side view showing the rears of the rear carrier and the top box.
[Figure 7] Figure 7 is a perspective view of the rear of the top box seen diagonally from upper and front sides.
[Figures 8A to 8C] Figures 8A to 8C are operation diagrams showing essentials in opening a lid by use of a lid disengaging button, Figure 8A is a view showing a state of a lid opening and closing mechanism when the lid is closed, Figure 8B is a view showing a state of the lid opening and closing mechanism when the lid disengaging button is pushed, and Figure 8C is a view showing a state of the lid opening and closing mechanism when the lid is opened.
[Figures 9A to 9C] Figures 9A to 9C are operation diagrams showing essentials in opening the lid by use of an actuator, Figure 9A is a view showing a state of the lid opening and closing mechanism when the lid is closed, Figure 9B is a view showing a state of the lid opening and closing mechanism when the actuator is operated, and Figure 9C is a view showing a state of the lid opening and closing mechanism when the lid is opened.
[Figures 10A to 10C] Figures 10A to 10C are operation diagrams showing essentials of top box attaching by a top box mounting and removing mechanism, Figure 10A is a view showing a state where the top box is mounted on the rear carrier, Figure 10B is a view showing a state where a box side rear engaging section is in the middle of engaging with a carrier side rear engaging section, and Figure 10C is a view showing a state where the box side rear engaging section is engaged with the carrier side rear engaging section.
[Figures 11A to 11C] Figures 11A to 11C are operation diagrams showing essentials in top box removal by the top box mounting and removing mechanism, Figure 11A is a view showing a state where the box side rear engaging section and the carrier side rear engaging section are engaged, Figure 11B is a view showing a state where the box side rear engaging section and the carrier side rear engaging section start to be disengaged, and Figure 11C is a view showing a state where the box side rear engaging section and the carrier side rear engaging section are completely disengaged.
[Figures 12A and 12B] Figures 12A and 12B are first operation diagrams showing essentials in locking the lid, Figure 12A is a view showing a state before lid is locked, and Figure 12B is a view showing a state after the lid is locked.
[Figures 13A and 13B] Figures 13A and 13B are second operation diagrams showing essentials in locking the lid, Figure 13A is a view showing a state where an upper lock bar is engaged with the lid disengaging button, and Figure 13B is a view showing a state where a lower lock bar protrudes rearward from an upper link.

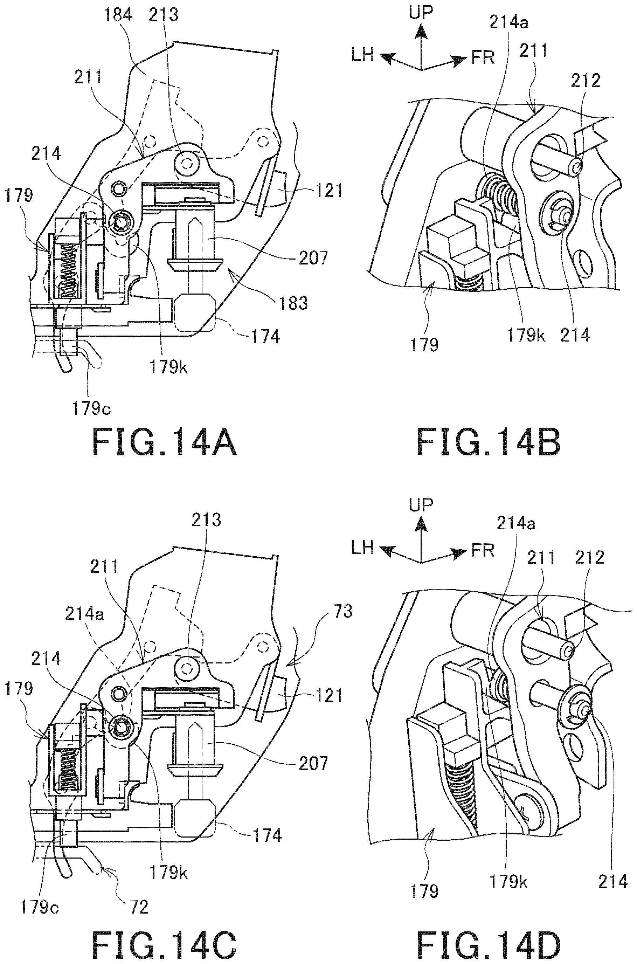

[Figures 14A to 14D] Figures 14A to 14D are operation diagrams showing an operation of a box mounting detection piece, Figure 14A is a view showing the operation of the box mounting detection piece in a state where the top box is removed from the rear carrier, Figure 14B is a view showing a state where a base member is moved to right in a vehicle width direction in the state of Figure 14A, Figure 14C is a view showing the operation of the box mounting detection piece in a state where the top box is attached to the rear carrier, and Figure 14D is a view showing a state where the base member is moved to the right in the vehicle width direction in the state of Figure 14C.

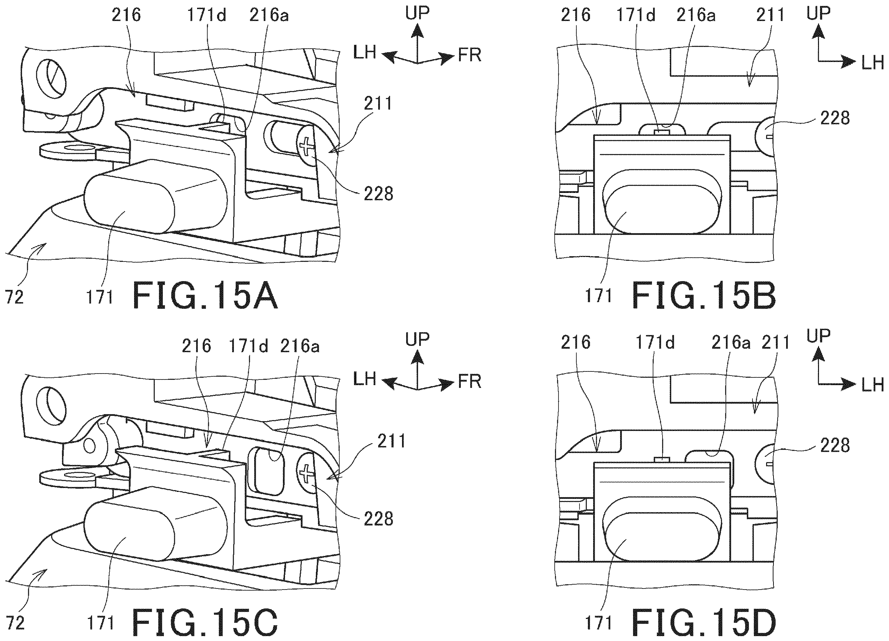

[Figures 15A to 15D] Figures 15A to 15D are operation diagrams showing an operation of a locking mechanism, Figure 15A is a perspective view showing a positional relation between a lock plate before moved and a box disengaging button, Figure 15B is a rear view showing a positional relation between the lock plate before moved and the box disengaging button, Figure 15C is a perspective view showing a positional relation between the moved lock plate and the box disengaging button, and Figure 15D is a rear view showing a positional relation between the moved lock plate and the box disengaging button.

### Description of Embodiments

Hereinafter, an embodiment of the present invention will be described with reference to the drawings. Note that in the description, front, rear, right, left, upper and lower directions are the same as those relative to a vehicle body unless otherwise mentioned. Furthermore, reference sign FR shown in respective drawings indicates a vehicle body front side, UP indicates a vehicle body upside, and LH indicates a vehicle body left side.

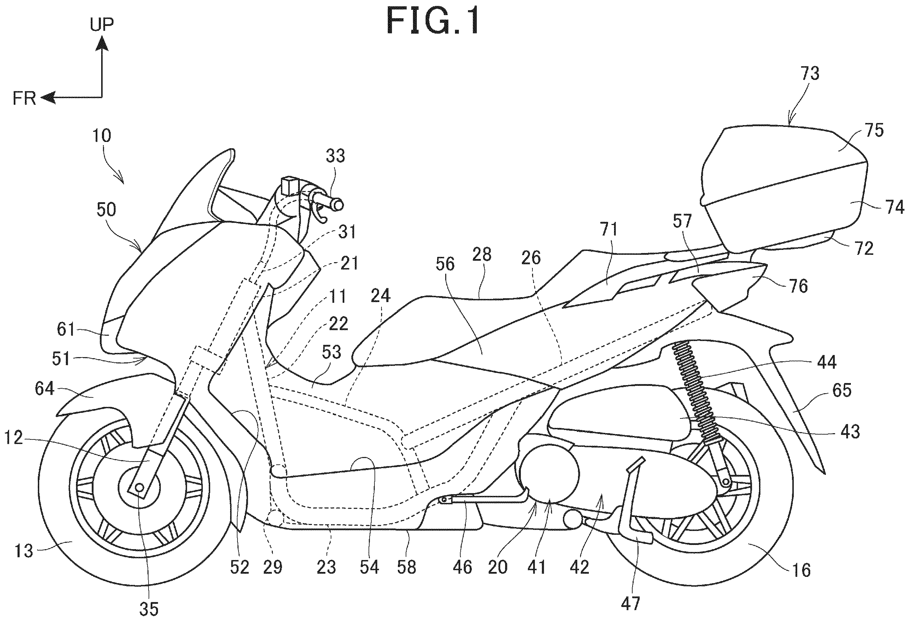

Figure 1 is a left side view showing a motorcycle 10 comprising an additional storage compartment structure according to the present invention.

The motorcycle 10 comprises a front wheel 13 supported by a front-end portion of a vehicle body frame 11 via a front fork 12, and a rear wheel 16 supported by a lower part of the vehicle body frame 11 via a power unit 20, and the rear wheel 16 is driven by the power unit 20. The motorcycle 10 is a saddled vehicle such as a scooter comprising a tandem seat 28 across which a driver and a passenger sit.

The vehicle body frame 11 comprises a head pipe 21, a down frame 22, a pair of right and left lower frames 23, a pair of right and left upper frames 24, and a pair of right and left rear frames 26.

The head pipe 21 is disposed in the front-end portion of the vehicle body frame 11, and steerably supports the front fork 12. The down frame 22 extends downward from the head pipe 21, and has a lower end portion connected to a lower cross pipe 29 extending in a vehicle width direction. The right and left lower frames 23 extend downward and rearward from lower right and left portions of the down frame 22, and then extend diagonally upward and rearward. The right and left portions of the down frame 22 that extend in a front-rear direction are arranged below right and left step floors 54 described later in detail, respectively. Opposite end portions of the lower cross pipe 29 are attached to lower front portions of the right and left lower frames 23.

The right and left upper frames 24 extend diagonally downward and rearward from right and left middle portions of the down frame 22, further bend diagonally downward and rearward and are connected to the right and left lower frames 23, respectively. The right and left rear frames 26 extend diagonally upward and rearward from bent portions of the right and left upper frames 24, and support a storage box 27 (not shown). The tandem seat 28 is attached to an upper part of the storage box.

Middles of the right and left rear frames 26 are connected to rear end portions of the right and left lower frames 23.

The front fork 12 comprises a steering stem 31 rotatably supported by the head pipe 21, and a handle 33 is attached to an upper end portion of the steering stem 31. Furthermore, the front wheel 13 is supported in a lower end portion of the front fork 12 via an axle 35.

The power unit 20 comprises a water-cooled engine 41 supported by a lower part of the vehicle body frame 11 via a pivot shaft (not shown) swingably in an up-down direction, and constituting a front, and comprises a continuously variable transmission 42 provided integrally with a rear of the engine 41. An output shaft is provided in a rear end portion of the continuously variable transmission 42, and the rear wheel 16 is attached to this output shaft. In an upper part of the power unit 20, an air cleaner 43 constituting an intake device of the engine 41 is provided.

A rear cushion unit 44 is provided to extend between the rear end portion of the continuously variable transmission 42 and a rear of the vehicle body frame 11.

A side stand 46 is attached to the lower part of the vehicle body frame 11, and a main stand 47 is attached to a bottom of the power unit 20.

The vehicle body frame 11 is covered with a vehicle body cover 50. The vehicle body cover 50 comprises a front cover 51, a pair of right and left leg shields 52, a center cover 53, a pair of right and left step floors 54, a pair of right and left side covers 56, a rear center cover 57, and an undercover 58.

The front cover 51 covers a front side of a front of the vehicle body frame 11, and front and opposite sides of the front fork 12. A head light 61 is disposed in the front cover 51. The right and left leg shields 52 extend inward from opposite side edges of the front cover 51 in the vehicle width direction to cover driver's leg parts from the front side. The center cover 53 is disposed on a rear side of the front fork 12 to cover a space between the right and left leg shields 52, and extends below the tandem seat 28. The right and left step floors 54 are parts on which the driver places feet, respectively, and extend rearward from respective lower end portions of the right and left leg shields 52. The right and left side covers 56 cover opposite lower side portions of the tandem seat 28. The rear center cover 57 connects rear end portions of the right and left side covers 56. The undercover 58 covers a vehicle body lower part.

The front wheel 13 is covered with a front fender 64 from above, and the rear wheel 16 is covered with a rear fender 65 from above.

Above the right and left side covers 56, a grab rail 71 to be grabbed by the passenger is disposed to surround opposite side portions and a rear of the tandem seat 28. A rear carrier 72 is attached to a rear of the grab rail 71, and a top box 73 as an additional storage compartment for article storage is removably attached to the rear carrier 72. A tail light 76 is disposed below the rear center cover 57.

The top box 73 comprises a box body 74, and a lid 75 openably and closably provided in an upper part of the box body 74.

The top box 73 is mountable on and removable from the rear carrier 72 by a top box mounting and removing mechanism (not shown) described later in detail, and is lockable in a state where the top box is attached to the rear carrier 72.

Furthermore, the lid 75 of the top box 73 is openable and closable to the box body 74 by a lid opening and closing mechanism (not shown) described later in detail, and is lockable in a state where the lid 75 is closed.

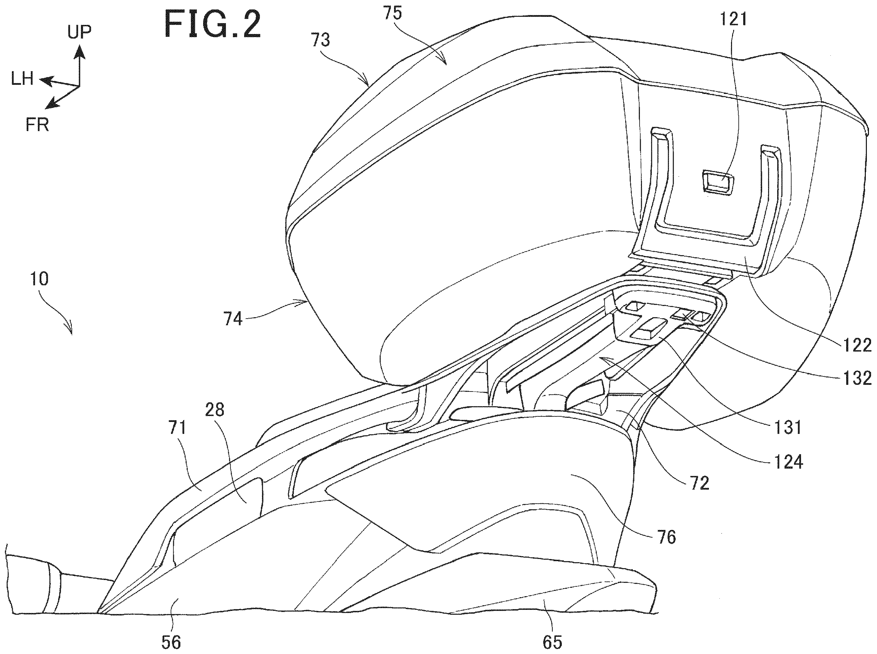

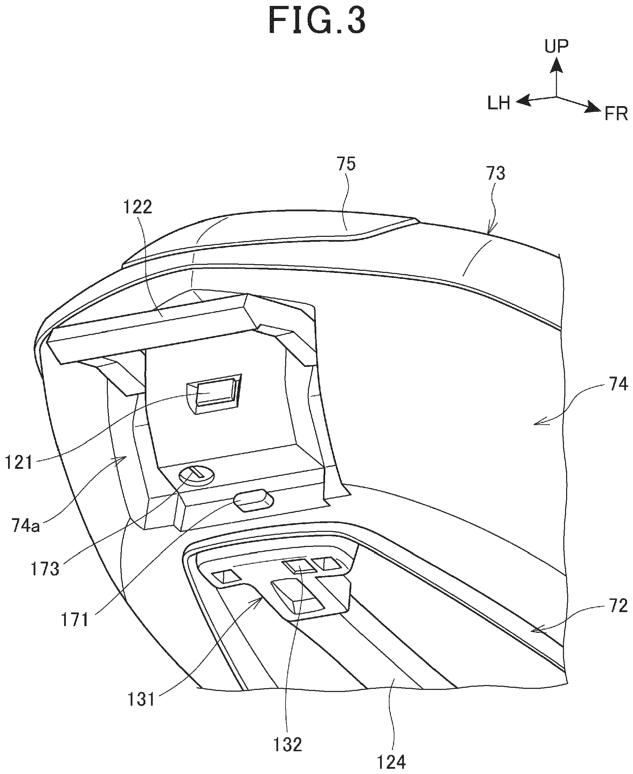

Figure 2 is a perspective view showing the top box 73 and a surrounding thereof, and Figure 3 is a perspective view of the top box 73 in which a handle 122 is set to a use state and the surrounding thereof.

As shown in Figure 2, in a rear surface of the box body 74 of the top box 73, provided are an engaging section (not shown) disposed in the box body 74, and a lid disengaging button 121 that manually disengages from an engaged section (not shown) disposed in the lid 75.

Furthermore, in the rear surface of the box body 74, the handle 122 that is U-shaped is swingably attached around the lid disengaging button 121. The handle 122 is a part to be held with a hand when removing the top box 73 from the rear carrier 72, and in a shown state in the drawing, the handle 122 is in a stored state of being disposed along the rear surface of the box body 74. Furthermore, in case of using the handle 122, as shown in Figure 3, the handle 122 is swung upward from the stored state, and raised in a standing state relative to the rear surface of the box body 74.

In Figure 2 and Figure 3, the lid 75 of the top box 73 is lockable by a locking mechanism (not shown) described later in detail. That is, the lid 75 can be locked so that the lid cannot be opened even by pushing the above lid disengaging button 121. The locking mechanism is provided in the top box 73.

The lid 75 can be opened by an actuator (not shown) provided on a vehicle body side in a state where the top box 73 is mounted on the vehicle, instead of pushing the lid disengaging button 121. To open the lid 75, the driver or the passenger who carries a smart key performs an operation of pushing a lid switch 132 provided in a lower part of the rear carrier 72.

A cable cover 124 that covers a cable provided between the above described locking mechanism and the actuator and a connecting section cover 131 provided with the lid switch 132 are attached to a lower surface of the rear carrier 72.

The connecting section cover 131 is attached to a rear end portion of the cable cover 124.

When the handle 122 is raised to the use state, a box disengaging button 171 that disengages the top box 73 from the rear carrier 72 is provided in a lower part of a handle storage compartment 74a in which the handle 122 of the box body 74 is stored.

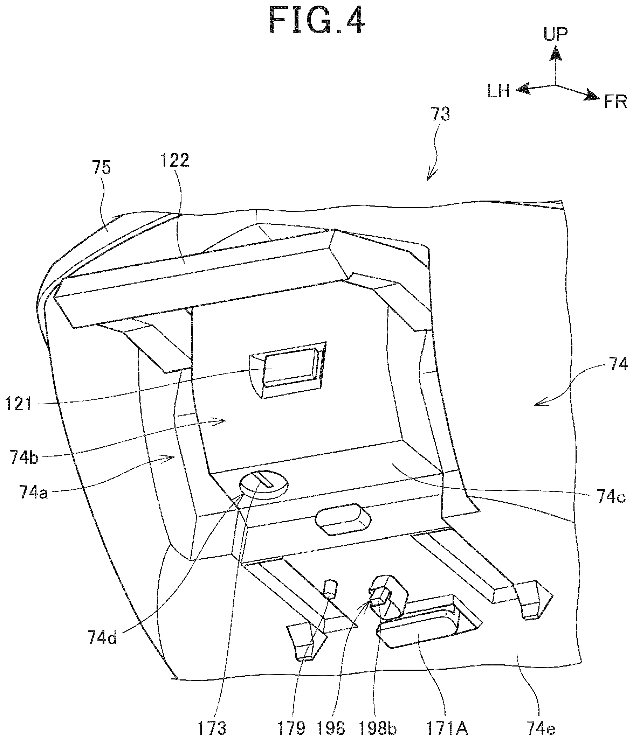

Figure 4 is a perspective view showing a rear and bottom of the top box 73. The top box 73 is in a removed state from the rear carrier 72 (see Figure 2).

In a rear surface of the top box 73, a rearward protrusion 74b surrounded with the handle storage compartment 74a comprising a U-shaped recess portion is formed, an opening 74d is made in a lower wall 74c of the rearward protrusion 74b, and a keyhole 173 is exposed from the opening 74d.

The keyhole 173 is provided in a lower end portion of a key cylinder (not shown) provided in the top box 73. The key cylinder constitutes a part of a locking mechanism (not shown) that prevents the lid disengaging button 121 from being pushed, to disable only the disengaging of the lid 75 by the lid disengaging button 121, and that locks and prevents the top box 73 from being removed from the rear carrier 72 when the top box 73 is mounted on the vehicle. In a state where the handle 122 is stored, the keyhole 173 is covered with the handle 122 and is not exposed to outside.

A hook-shaped box side rear engaging section 171A engaged on a rear carrier 72 side protrudes downward from a bottom wall 74e of the box body 74. Furthermore, a lower link 198 that constitutes the lid opening and closing mechanism (not shown) and a box mounting detection piece 179 that detects a state where the top box 73 is mounted on the vehicle protrude from the bottom wall 74e.

The lower link 198 is a portion to be swung by the above described actuator when opening the lid 75.

The box mounting detection piece 179 is pushed into the box body 74 when the top box 73 is mounted on the rear carrier 72.

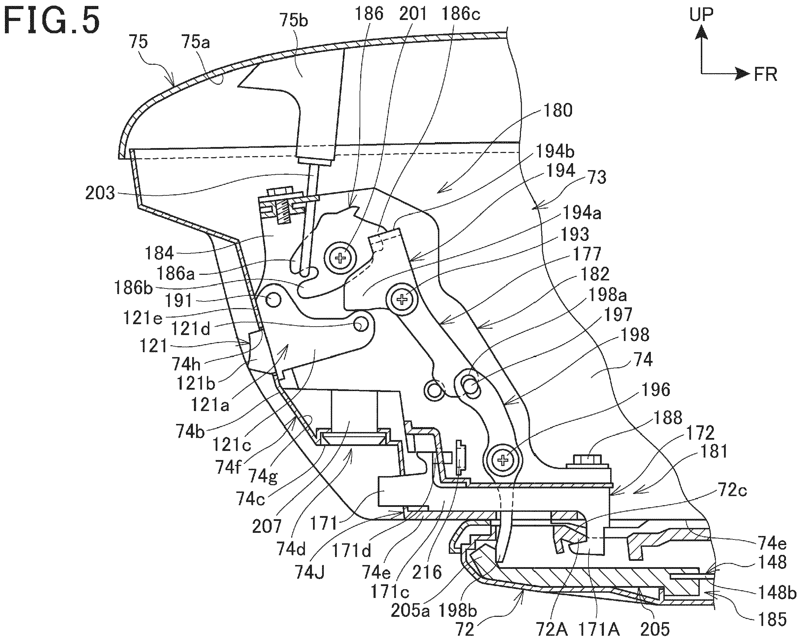

Figure 5 is a cross-sectional view showing rears of the rear carrier 72 and the top box 73.

The top box 73 comprises, in a rear of the box body 74, a top box mechanism section 180 used to open and close the lid 75 and lock a closed state and to mount and remove the top box 73 on and from the rear carrier 72 and lock an attached state.

The top box mechanism section 180 comprises a top box mounting and removing mechanism 181 that allows the top box 73 to be mounted and removed on and from the rear carrier 72, a lid opening and closing mechanism 182 that can open and close the lid 75, and a locking mechanism 183 that locks the lid 75 and the top box 73.

The lid opening and closing mechanism 182 comprises a support member 184, the lid disengaging button 121, an upper link 194, and a locking plate 186.

The support member 184 is attached to the box body 74 with a plurality of bolts 188.

The lid disengaging button 121 is integrally formed of a movable section body 121a swingably supported by the support member 184 via a spindle 191 and disposed in the box body 74, and a pressing portion 121b protruding rearward from the movable section body 121a.

The movable section body 121a comprises an arm portion 121c protruding forward, and a bar insertion hole 121d is made in a tip portion of the arm portion 121c. The pressing portion 121b is a portion to be pushed with a hand, and protrudes outward from the box body 74 through a button opening 74h provided in a rear wall 74f of the box body 74.

The lid disengaging button 121 is urged clockwise by an unshown spring, and a rear end face 121e of the movable section body 121a is pressed onto an inner surface 74g of the rear wall 74f of the box body 74.

A coupling link 177 comprises the upper link 194 and the lower link 198.

The upper link 194 is swingably supported by the support member 184 via a spindle 193. The upper link 194 comprises a rear arm portion 194a to which the arm portion 121c of the lid disengaging button 121 is attached from below and that extends rearward, an upper link locking portion 194b that locks the locking plate 186, and a coupling pin 197 coupling to the lower link 198. The upper link 194 is urged counterclockwise about the spindle 193 by an unshown return spring.

The lower link 198 is swingably supported by the support member 184 via a spindle 196, and the coupling pin 197 of the upper link 194 is movably inserted in a long hole 198a formed in an upper end portion of the lower link to couple the lower link to the upper link 194.

The locking plate 186 is swingably supported by the support member 184 via a spindle 201, comprises a locking claw 186a, a lower claw 186b and a locked portion 186c, and is urged clockwise by an unshown return spring.

The locking claw 186a locks a tip portion of a U-shaped striker 203 extending downward from a striker support portion 75b provided in an inner surface 75a of the lid 75. The lower claw 186b is disposed opposite to the locking claw 186a and below the locking claw 186a. The locked portion 186c is provided on a side opposite to the locking claw 186a and the lower claw 186b to the spindle 201, and locked by the upper link locking portion 194b of the upper link 194.

When the lid 75 starts to close from an open state, the striker 203 abuts on the lower claw 186b oriented diagonally upward and rearward, and the locking plate 186 rotates counterclockwise. Through this rotation, the locked portion 186c is locked with the upper link locking portion 194b of the upper link 194, and as a result, the striker 203 is locked with the locking claw 186a.

The top box mounting and removing mechanism 181 comprises a box mounting and removing member 172 including a box disengaging button 171, an extended portion 171c and the box side rear engaging section 171A, and a mounting and removing member support section 74J slidably supporting the box mounting and removing member 172.

The box disengaging button 171 is provided in a lower part of the box body 74, specifically along the bottom wall 74e of the box body 74. The extended portion 171c is a portion provided integrally with a front-end portion of the box disengaging button 171 and extending in the front-rear direction, and an upward and forward protrusion 171d protruding upward and forward is formed integrally with a rear of the extended portion 171c. The box side rear engaging section 171A is a hook-shaped section provided integrally with a front-end portion of the extended portion 171c to protrude downward, and is engageable with a carrier side rear engaging section 72A of the rear carrier 72 described later in detail.

The mounting and removing member support section 74J is formed of the bottom wall 74e of the box body 74 and the support member 184.

The rear carrier 72 comprises the carrier side rear engaging section 72A that engages with the box side rear engaging section 171A.

The rear carrier 72 comprises a pair of right and left carrier side front engaging sections (not shown) provided on a front side, and the carrier side rear engaging section 72A provided on a rear side, respectively, on an upper surface side of the carrier. Furthermore, the top box 73 comprises a pair of right and left box side front engaging sections (not shown) provided on a front side of the bottom wall 74e of the box body 74, and the box side rear engaging section 171A provided on a rear side of the bottom wall 74e.

The rear carrier 72 and the top box 73 engage with the above described right and left carrier side front engaging sections and right and left box side front engaging sections, the carrier side rear engaging section 72A and the box side rear engaging section 171A, respectively, to attach the top box 73 to the rear carrier 72.

The carrier side rear engaging section 72A comprises a downwardly inclined surface 72c on which the box side rear engaging section 171A slides during engagement.

When the carrier side rear engaging section 72A and the box side rear engaging section 171A are disengaged, the rear of the top box 73 is raised, and hence when the right and left carrier side front engaging sections and the right and left box side front engaging sections are disengaged, the top box 73 can be removed from the rear carrier 72.

The rear carrier 72 comprises a link locking member 205 provided to be movable in the front-rear direction in an interior of the carrier. The link locking member 205 comprises a link locking hook 205a in a rear end portion of the member, and a lower end portion 198b of the lower link 198 is locked with the link locking hook 205a.

A front-end portion of the link locking member 205 is connected to the actuator (not shown) via a cable 148 (specifically, an inner wire 148b).

A key cylinder 207 is attached to the lower wall 74c of the rearward protrusion 74b of the box body 74. The keyhole 173 (see Figure 4) of the key cylinder 207 is disposed in the opening 74d of the lower wall 74c.

The above described support member 184, the coupling link 177, the locking plate 186, the link locking member 205, the cable 148 and the actuator constitute a lid opening and closing mechanism 185.

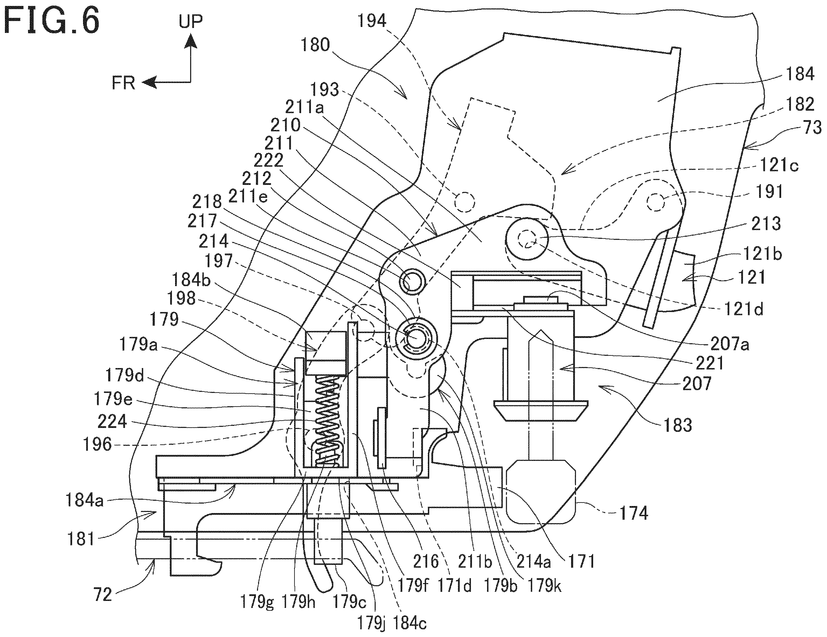

Figure 6 is a left side view showing the rears of the rear carrier 72 and the top box 73.

The top box mechanism section 180 comprises the locking mechanism 183 that locks the lid (see Figure 5) and the top box 73 (i.e., prevents the lid 75 from being opened, and prevents the top box 73 from being removed from the rear carrier 72).

The locking mechanism 183 comprises the key cylinder 207, a key 174 to be inserted in the keyhole 173 (see Figure 4) of the key cylinder 207, and a lateral movement mechanism 210 that is movable in the vehicle width direction by turning of the key 174.

The lateral movement mechanism 210 comprises a base member 211, a movable guide pin 212, an upper lock bar 213, a lower lock bar 214, and a lock plate 216.

The key cylinder 207 comprises a rotary shaft 207a that rotates integrally with the key 174 inserted in the keyhole 173. An arm 221 is attached to the rotary shaft 207a, and a columnar pressing piece 222 is attached to a tip portion of the arm 221.

The base member 211 is formed integrally of a front-rear extending portion 211a extending in the front-rear direction, and an up-down extending portion 211b extending downward from a front end of the front-rear extending portion 211a, in an L-shape in side view. The base member 211 is pushed by the pressing piece 222 provided in the key cylinder 207, to move in the vehicle width direction.

In the base member 211, each of the upper lock bar 213, the lower lock bar 214 and the lock plate 216 is supported to extend in the vehicle width direction. The movable guide pin 212 is supported by the support member 184, to extend in the vehicle width direction.

The movable guide pin 212 is inserted in a pin insertion hole 211e provided in corner portions of the front-rear extending portion 211a and the up-down extending portion 211b of the base member 211, to guide the base member 211 so that the member moves in the vehicle width direction.

The upper lock bar 213 has one end fixed to the base member 211 and is movably supported by the support member 184. When the base member 211 moves in the vehicle width direction, the upper lock bar 213 extends through the support member 184, and is further inserted in the bar insertion hole 121d (see Figure 5) of the lid disengaging button 121. Consequently, it is possible to lock rotation of the lid disengaging button 121.

The lower lock bar 214 is movably supported by the base member 211 and the support member 184. When moving in the vehicle width direction, the base member 211 extends through the support member 184 and further protrudes rearward from the upper link 194. This can obstruct clockwise rotation of the upper link 194.

The lower lock bar 214 has one end portion fitted in a retaining ring 217, and has an intermediate portion provided integrally with a flange 214a. A spring (not shown) that urges the lower lock bar 214 on one side (a right side) in the vehicle width direction is provided between the flange 214a and the base member 211. A washer 218 is fitted in the lower lock bar 214 between the base member 211 and the retaining ring 217.

The lock plate 216 is attached to a front surface of a lower end portion of the base member 211 in the up-down extending portion 211b. When the base member 211 moves in the vehicle width direction, the lock plate extends through the support member 184, and is further disposed on a front side of the upward and forward protrusion 171d of the box disengaging button 171.

The box mounting detection piece 179 is disposed on a front side of the base member 211, and is supported movably in the up-down direction by a bottom 184a of the support member 184.

The box mounting detection piece 179 comprises a box-shaped portion 179a disposed above the bottom 184a, an upper hook portion 179b extending rearward from an upper portion of the box-shaped portion 179a, and a downward extending portion 179c extending downward from the box-shaped portion 179a.

The box-shaped portion 179a comprises a front wall 179d, a side wall 179e, a rear wall 179f, a bottom wall 179g and an upper protrusion 179h protruding upward from the bottom wall 179g. In the box-shaped portion 179a, disposed is a compression coil spring 224 having opposite ends supported by the bottom wall 179g and a spring support portion 184b protruding from the support member 184 on the other side in the vehicle width direction (on a left side in the vehicle width direction). The compression coil spring 224 urges the box mounting detection piece 179 downward. In a state where the top box 73 is removed from the rear carrier 72, a lower surface 179j of the bottom wall 179g is pressed onto the bottom 184a.

The upper hook portion 179b comprises a hook 179k opened upward in a rear end portion of the hook portion. The hook 179k engages with the lower lock bar 214, when the box mounting detection piece 179 moves upward.

The downward extending portion 179c is movably inserted in an extending portion insertion hole 184c formed in the bottom 184a of the support member 184.

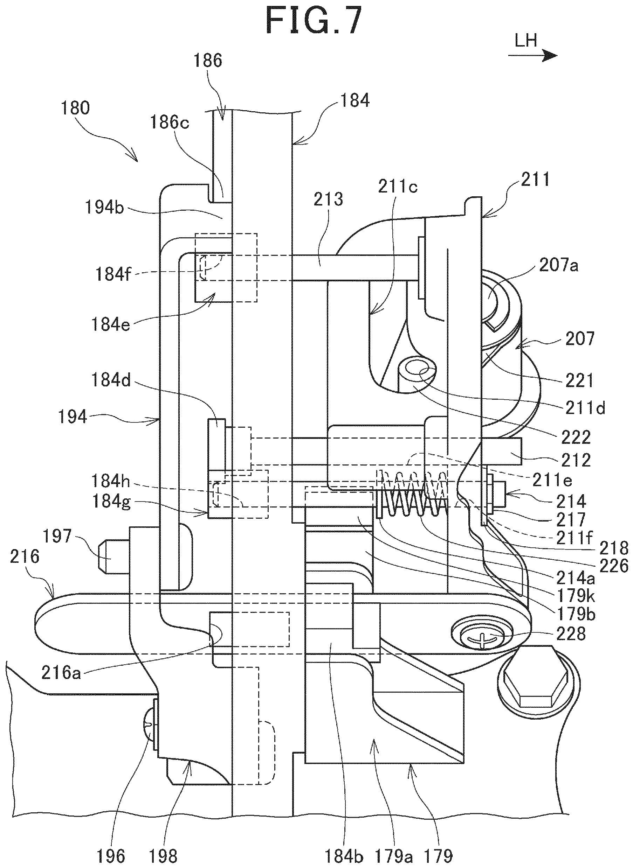

Figure 7 is a perspective view of the rear of the top box 73 seen diagonally from upper and front sides.

The base member 211 comprises a guide groove 211c that is provided in the arm 221 of the key cylinder 207 and through which the pressing piece 222 moves. In Figure 7, the pressing piece 222 is located in a recessed portion 211d formed in an end portion of the guide groove 211c, and the base member 211 is located closest to the other side (the left side) in the vehicle width direction.

In the movable guide pin 212, one end is fixed to a boss portion 184d provided in the support member 184, an intermediate portion extends through a pin insertion hole 211e of the base member 211, and the other end protrudes outward from the pin insertion hole 211e.

In the upper lock bar 213, one end is fixed to the base member 211, and the other end is movably inserted in a bar insertion hole 184f of a boss portion 184e provided in the support member 184.

In the lower lock bar 214, one end movably extends through a bar insertion hole 211f formed in the base member 211 and is retained with the retaining ring 217, and the other end is movably inserted in a bar insertion hole 184h of a boss portion 184g provided in the support member 184.

A compression coil spring 226 is disposed between the flange 214a provided in the intermediate portion of the lower lock bar 214 and the base member 211, and the lower lock bar 214 is urged to one side (the right side) in the vehicle width direction.

In the lock plate 216, one end is fixed to the base member 211 via a bis 228, and the other end is a free end. In an intermediate portion of the lock plate 216, a rectangular opening 216a opened downward is formed.

The hook 179k of the box mounting detection piece 179 is disposed below the lower lock bar 214, and is disposed on one side (the right side) of the flange 214a of the lower lock bar 214 in the vehicle width direction and on the other side (the left side) of a side surface 184j on the other side (the left side) of the support member 184, in the vehicle width direction. Consequently, the hook 179k is engageable with a portion of the lower lock bar 214 on one side (the right side) of the flange 214a in the vehicle width direction.

Next, an operation of the top box mechanism section 180 described above will be described. Hereinafter, description will be made as to (1) the mounting and removing of the top box 73, (2) opening and closing of the lid 75 and (3) the locking of the lid 75 and the top box 73, in both of a state where the top box 73 is removed from the rear carrier 72 (a top box alone) and a state where the top box is attached to the rear carrier 72 (the top box mounted on the vehicle).

### <Lid Opening and Closing in Top Box alone>

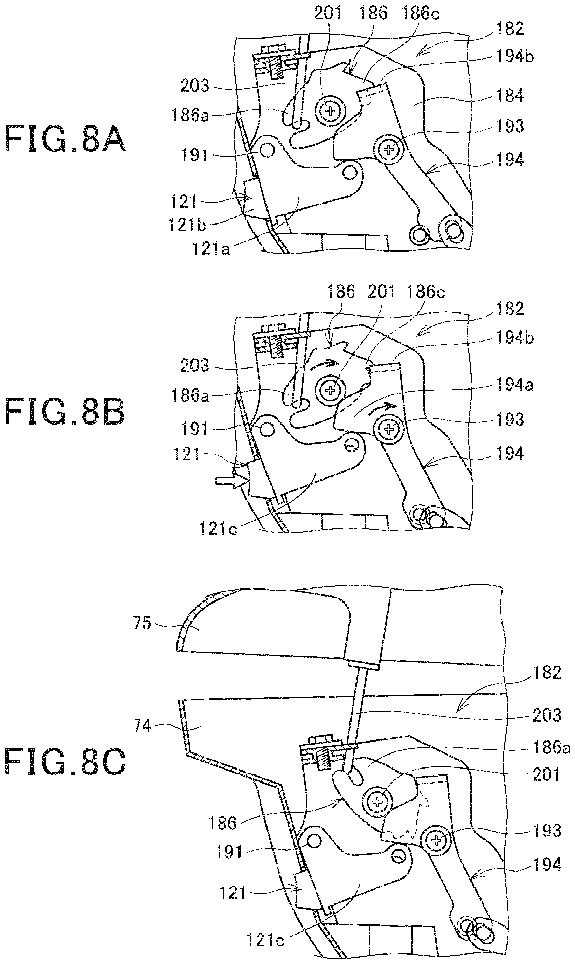

Figures 8A to 8C are operation diagrams showing essentials in opening the lid 75 by use of the lid disengaging button 121.

Figure 8A is a view showing a state of the lid opening and closing mechanism 182 when the lid 75 is closed, Figure 8B is a view showing a state of the lid opening and closing mechanism 182 when the lid disengaging button 121 is pushed, and Figure 8C is a view showing a state of the lid opening and closing mechanism 182 when the lid 75 is opened.

As shown in Figure 8A, the striker 203 of the lid 75 is locked with the locking claw 186a of the locking plate 186, and the locked portion 186c of the locking plate 186 is locked with the upper link locking portion 194b of the upper link 194.

As shown in Figure 8B, when the lid disengaging button 121 is pushed as shown with a white arrow, the arm portion 121c of the lid disengaging button 121 pushes upward the rear arm portion 194a of the upper link 194. Consequently, the upper link 194 rotates clockwise about the spindle 193 as shown with an arrow. As a result, the upper link locking portion 194b of the upper link 194 disengages from the locked portion 186c of the locking plate 186.

At this time, the locking plate 186 rotates clockwise by an elastic force of the return spring (not shown) as shown with an arrow, and as shown in Figure 8C, the locking claw 186a is oriented diagonally upward and rearward. Consequently, the striker 203 disengages from the locking claw 186a of the locking plate 186, and the lid 75 opens.

To close the lid 75, the lid 75 is pushed downward. Consequently, a tip of the striker 203 abuts on the lower claw 186b of the locking plate 186, to lower the lower claw 186b. That is, the locking plate 186 rotates counterclockwise. In middle of the rotation, the upper link locking portion 194b of the upper link 194 urged on a locking plate 186 side locks the locked portion 186c of the locking plate 186. Consequently, the lid 75 is in the closed state.

### <Lid Opening and Closing in Top Box mounted on Vehicle>

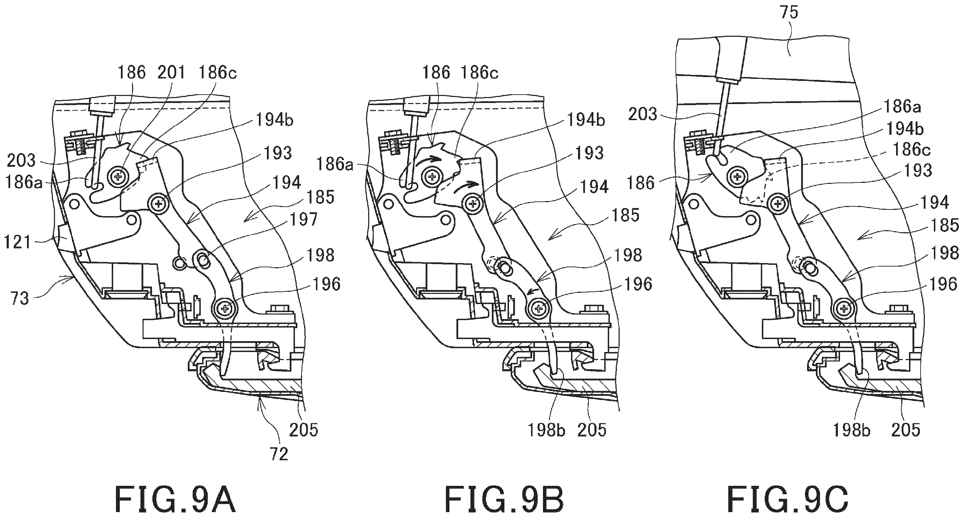

Figures 9A to 9C are operation diagrams showing essentials in opening the lid 75 by use of the actuator.

Figure 9A is a view showing a state of the lid opening and closing mechanism 185 when the lid 75 is closed, Figure 9B is a view showing a state of the lid opening and closing mechanism 185 when the actuator is operated, and Figure 9C is a view showing a state of the lid opening and closing mechanism 185 when the lid 75 is opened.

As shown in Figure 9A, in a state where the lid 75 is closed, the lid switch 132 (see Figure 2) provided in the lower surface of the rear carrier 72 is pushed.

Consequently, as shown in Figure 9B, the actuator provided on the vehicle body side operates, and the link locking member 205 connected to the actuator via the cable pulls the lower end portion 198b of the lower link 198 forward in the vehicle. Consequently, the lower link 198 rotates counterclockwise about the spindle 196 as shown with an arrow, and the upper link 194 accordingly rotates clockwise about the spindle 193 as shown with an arrow. Then, the upper link locking portion 194b of the upper link 194 disengages from the locked portion 186c of the locking plate 186.

As a result, the locking plate 186 rotates clockwise as shown with an arrow by an elastic force of the return spring (not shown), and as shown in Figure 9C, the striker 203 disengages from the locking claw 186a of the locking plate 186, to open the lid 75. The lid 75 is closed in the same manner as described above.

### <Mounting and Removing of Top Box (Attaching)>

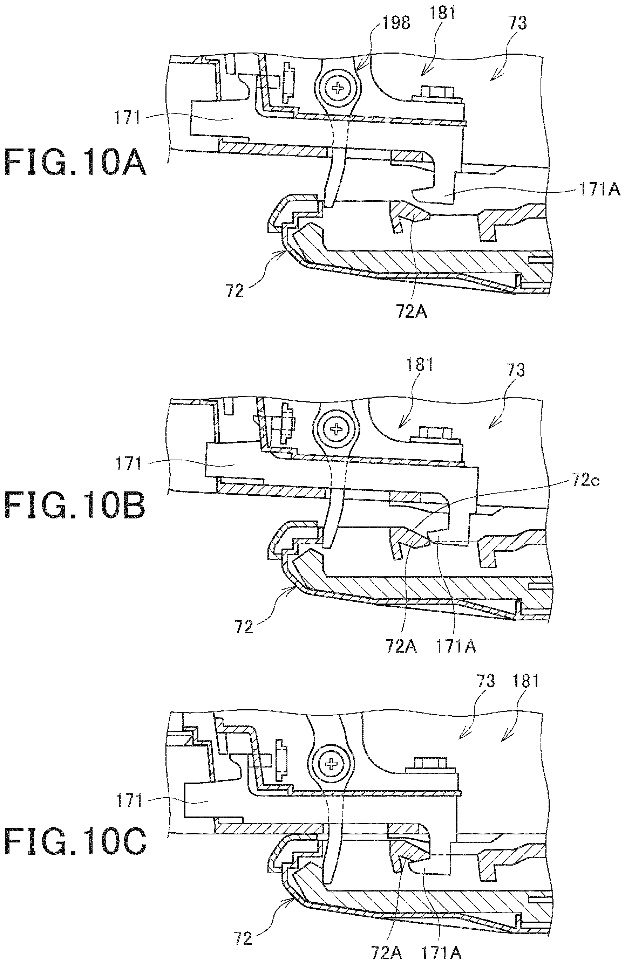

Figures 10A to 10C are operation diagrams showing essentials of top box attaching by the top box mounting and removing mechanism 181. Figure 10A is a view showing a state where the top box 73 is mounted on the rear carrier 72, Figure 10B is a view showing a state where the box side rear engaging section 171A is in the middle of engaging with the carrier side rear engaging section 72A, and Figure 10C is a view showing a state where the box side rear engaging section 171A is engaged with the carrier side rear engaging section 72A.

As shown in Figure 10A, the right and left box side front engaging sections of the top box 73 are engaged with the right and left carrier side front engaging sections of the rear carrier 72. Thereafter, the rear of the top box 73 is pushed downward, while aligning the box side rear engaging section 171A of the top box 73 with the carrier side rear engaging section 72A of the rear carrier 72.

Consequently, as shown in Figure 10B, the box side rear engaging section 171A of the top box 73 moves forward while slipping on the inclined surface 72c above the carrier side rear engaging section 72A of the rear carrier 72.

Then, as shown in Figure 10C, the box side rear engaging section 171A urged rearward by the return spring engages with the carrier side rear engaging section 72A.

### <Mounting and Removing of Top Box (Removal)>

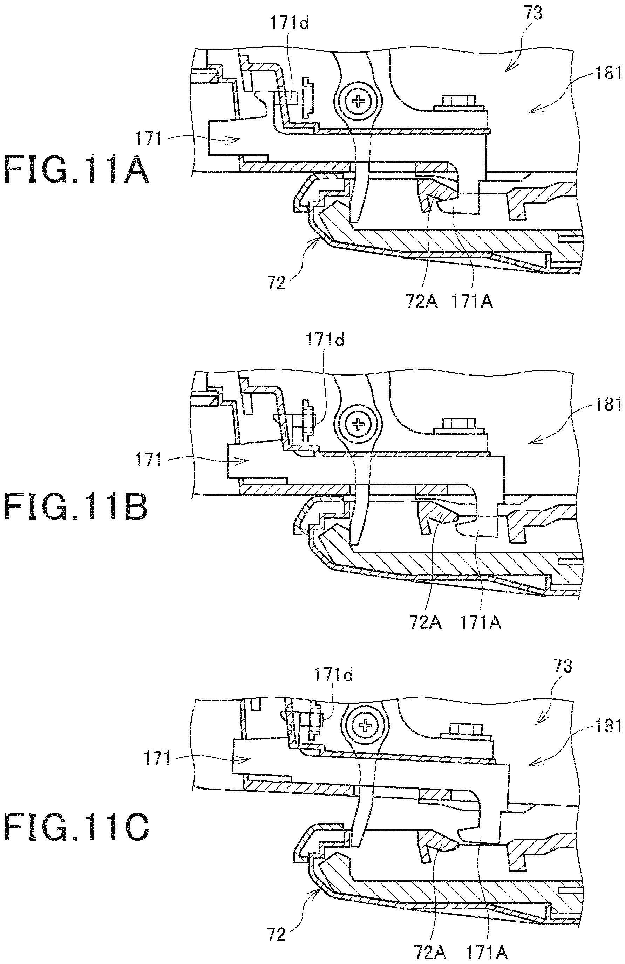

Figures 11A to 11C are operation diagrams showing essentials in top box removal by the top box mounting and removing mechanism 181. Figure 11A is a view showing a state where the box side rear engaging section 171A and the carrier side rear engaging section 72A are engaged, Figure 11B is a view where the box side rear engaging section 171A and the carrier side rear engaging section 72A start to be disengaged, and Figure 11C is a view showing a state where the box side rear engaging section 171A and the carrier side rear engaging section 72A are completely disengaged.

As shown in Figure 11A, when the box disengaging button 171 is pushed inward from the state where the box side rear engaging section 171A and the carrier side rear engaging section 72A are engaged, as shown in Figure 11B, the box side rear engaging section 171A moves forward in the vehicle. Then, when a tip of the box side rear engaging section 171A is beyond a front-end position of the carrier side rear engaging section 72A, as shown in Figure 11C, the box side rear engaging section 171A and the carrier side rear engaging section 72A are disengaged.

At this time, the rear of the top box 73 is raised by a reaction force of a rubber (not shown) provided in a bottom surface of the top box 73. Thereafter, the right and left box side front engaging sections of the top box 73 and the right and left carrier side front engaging sections of the rear carrier 72 are disengaged, to remove the top box 73 from the rear carrier 72.

### <Lid Locking in Top Box alone>

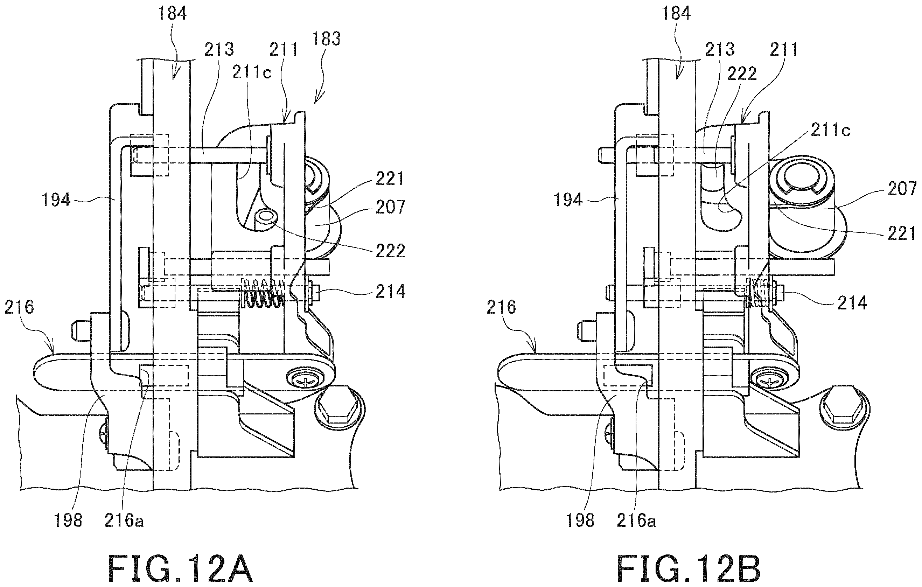

Figures 12A and 12B are first operation diagrams showing an operation of locking the lid 75 by the locking mechanism 183. Figure 12A is a view showing a state before the lid 75 is locked, and Figure 12B is a view showing a state after the lid 75 is locked. Note that the top box 73 is in a removed state from the rear carrier 72.

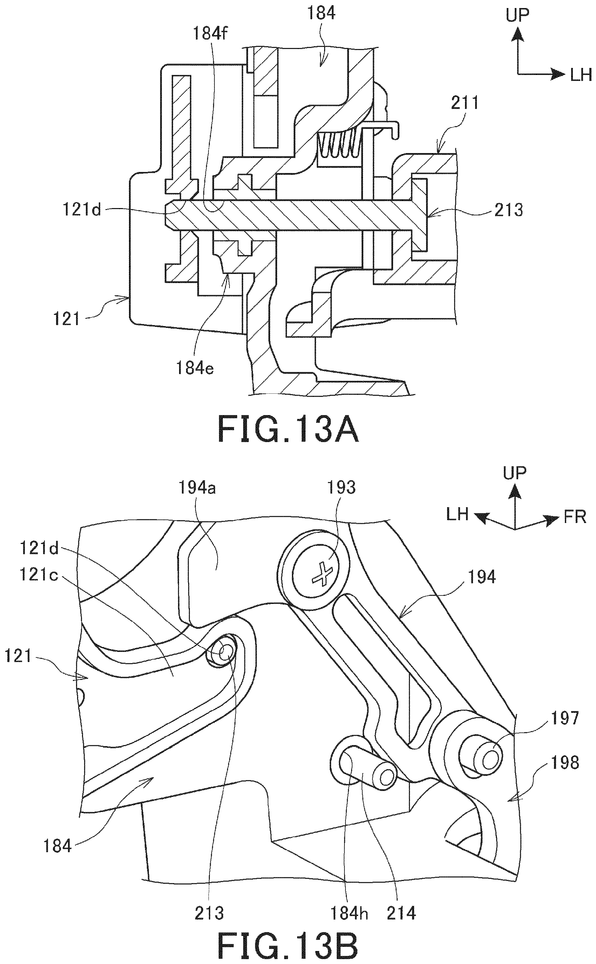

Figures 13A and 13B are second operation diagrams showing an operation of locking the lid 75 by the locking mechanism 183. Figure 13A is a view showing a state where the upper lock bar 213 is engaged with the lid disengaging button 121, and Figure 13B is a view showing a state where the lower lock bar 214 protrudes rearward from the upper link 194. Note that the top box 73 is in the removed state from the rear carrier 72.

As shown in Figure 12A, the arm 221 of the key cylinder 207 is not rotated by the key 174 (see Figure 6). The base member 211 is closest to the other side (the left side) in the vehicle width direction. Therefore, the upper lock bar 213 is separated from the lid disengaging button 121 (see Figure 5), and the lower lock bar 214 is separated from the upper link 194. Furthermore, the opening 216a of the lock plate 216 is located on a front side of the upward and forward protrusion 171d (see Figure 6) of the box disengaging button 171 (see Figure 6).

As shown in Figure 12B, when the key 174 (see Figure 6) inserted in the key cylinder 207 is turned to rotate the arm 221 rearward in the vehicle, the pressing piece 222 in the tip portion of the arm 221 moves on one side (the right side) in the vehicle width direction, and hence the base member 211 moves to the right in the vehicle width direction.

Consequently, as shown in Figure 13A, the upper lock bar 213 is inserted in the bar insertion hole 121d of the lid disengaging button 121, and the lid disengaging button 121 cannot be pushed inward.

Furthermore, as shown in Figure 13B, the lower lock bar 214 protrudes rearward from the upper link 194, and hence the upper link 194 cannot rotate clockwise about the spindle 193. As above, in Figure 5, the locking plate 186 cannot rotate, the striker 203 of the lid 75 does not disengage from the locking plate 186, and the lid 75 cannot be opened. That is, the lid disengaging button 121 cannot be used to open the lid 75, and the lid 75 is locked.

### <Lid Locking in Top Box mounted on Vehicle>

Figures 14A to 14D are operation diagrams showing an operation of the box mounting detection piece 179.

Figure 14A is a view showing the operation of the box mounting detection piece 179 in a state where the top box 73 is removed from the rear carrier 72, Figure 14B is a view showing a state where the base member 211 is moved to the right in the vehicle width direction in the state of Figure 14A, Figure 14C is a view showing the operation of the box mounting detection piece 179 in a state where the top box 73 is attached to the rear carrier 72, and Figure 14D is a view showing a state where the base member 211 is moved to the right in the vehicle width direction in the state of Figure 14C.

As shown in Figure 14A and Figure 14B, nothing pushes a lower end of the downward extending portion 179c of the box mounting detection piece 179 upward, and hence the box mounting detection piece 179 is located at a lowermost position. Therefore, when the base member 211 is moved in the vehicle width direction, movement of the lower lock bar 214 is not regulated by the box mounting detection piece 179. Therefore, the locking mechanism 183 regulates pushing of the lid disengaging button 121 by the upper lock bar 213 as well as rotation of the lower link 198 by the lower lock bar 214, and the lid 75 is locked (see Figure 5).

Furthermore, as shown in Figure 14C and Figure 14D, in the state where the top box 73 is attached to the rear carrier 72, the lower end of the downward extending portion 179c of the box mounting detection piece 179 abuts on the rear carrier 72 and is pushed into the top box 73. Therefore, the hook 179k of the box mounting detection piece 179 engages with the lower lock bar 214. Consequently, when the base member 211 moves in the vehicle width direction, the hook 179k abuts on the flange 214a of the lower lock bar 214, to regulate the movement of the lower lock bar 214. As a result, the lid disengaging button 121 cannot be pushed inward by the upper lock bar 213, but the rotation of the upper link 194 (see Figure 5) by the lower lock bar 214 is not regulated. Therefore, the lid opening and closing mechanism 185 enables the opening and closing of the lid 75.

### <Top Box Locking in Top Box mounted on Vehicle>

Figures 15A to 15D are operation diagrams showing an operation of the locking mechanism 183.

Figure 15A is a perspective view showing a positional relation between the lock plate 216 before moved and the box disengaging button 171, Figure 15B is a rear view showing a positional relation between the lock plate 216 before moved and the box disengaging button 171, Figure 15C is a perspective view showing a positional relation between the moved lock plate 216 and the box disengaging button 171, and Figure 15D is a rear view showing a positional relation between the moved lock plate 216 and the box disengaging button 171.

As shown in Figure 15A and Figure 15B, in a state where the pressing piece 222 of the key cylinder 207 (see Figure 6) is not rotated by the key 174 (see Figure 6) and the base member 211 is not moved in the vehicle width direction, the opening 216a of the lock plate 216 is located on a vehicle front side of the upward and forward protrusion 171d of the box disengaging button 171. In this state, when the box disengaging button 171 is pushed forward in the vehicle, the upward and forward protrusion 171d enters the opening 216a, and the box disengaging button 171 can be pushed into a predetermined position. Consequently, a top box 73 side and the rear carrier 72 side can be disengaged, and the top box 73 can be removed from the rear carrier 72.

As shown in Figure 15C and Figure 15D, in a state where the pressing piece 222 (see Figure 6) of the key cylinder 207 (see Figure 6) is rotated by the key 174 (see Figure 6) to move the base member 211 in the vehicle width direction, the opening 216a of the lock plate 216 is disposed away from the vehicle front side of the upward and forward protrusion 171d of the box disengaging button 171. Therefore, when the box disengaging button 171 is pushed forward from this state in the vehicle, the upward and forward protrusion 171d abuts on a portion in which the opening 216a of the lock plate 216 is not present, and the box disengaging button 171 cannot be pushed into the predetermined position. Therefore, the top box 73 side and the rear carrier 72 side cannot be disengaged, and the top box 73 cannot be removed from the rear carrier 72. That is, the box disengaging button 171 cannot be used, and the engagement of the top box 73 and the rear carrier 72 can be maintained.

As described above and shown in Figure 1 and Figure 5, in the motorcycle 10 as the saddled vehicle, the top box 73 as the additional storage compartment mountable on and removable from the rear carrier 72 as the vehicle body is provided.

The additional storage compartment structure of the motorcycle 10 is integrally provided with the top box mounting and removing mechanism 181 as the storage compartment mounting and removing mechanism for mounting and removing the top box 73 to and from the rear carrier 72, and the lid opening and closing mechanism 182 as the opening and closing mechanism for opening and closing the top box 73 (specifically, the lid 75).

According to this configuration, the top box mounting and removing mechanism 181 and the lid opening and closing mechanism 182 do not have to be separated, and a limited storage space can be sufficiently utilized.

Furthermore, as shown in Figure 2 and Figure 5, the top box mounting and removing mechanism 181 comprises the carrier side rear engaging section 72A as a vehicle body side engagement mechanism provided in the rear carrier 72, and the box side rear engaging section 171A as a storage compartment side engagement mechanism provided in the top box 73, and when the top box 73 is pressed onto the rear carrier 72, the box side rear engaging section 171A slides on the inclined surface 72c provided in the carrier side rear engaging section 72A to engage the top box 73 with the rear carrier 72.

According to this configuration, the box side rear engaging section 171A is guided along the inclined surface 72c provided in the carrier side rear engaging section 72A and is engaged, so that the engaging can be further facilitated, and user convenience can be improved.

Furthermore, as shown in Figure 2, Figure 3 and Figure 5, the top box 73 comprises the handle 122 changeable between the stored state and the use state, and the keyhole 173 in which the key 174 is inserted to lock, the keyhole 173 is arranged to be covered with the handle 122 in the stored state, the top box 73 comprises the top box mounting and removing mechanism 181 that is mountable on and removable from the rear carrier 72, and when the key 174 is inserted in the keyhole 173 and turned, the top box mounting and removing mechanism 181 is unlocked, and when the key 174 is inserted in the keyhole 173 and the key 174 is turned in a direction opposite to an unlocked direction of the top box mounting and removing mechanism 181 in a state where the top box 73 is mounted on the rear carrier 72, the top box mounting and removing mechanism 181 is locked.

According to this configuration, the keyhole 173 is covered with the handle 122, so that an anti-theft effect can be enhanced without compromising user's usability.

Additionally, as shown in Figure 5, the top box 73 comprises the lid opening and closing mechanism 182, the lid opening and closing mechanism 182 comprises the locking plate 186 as a locking member that locks the lid 75 as an opening and closing section of the top box 73 in the closed state, the upper link 194 as a link member that locks the locking plate 186, and the lid disengaging button 121 as an operating section that is abuttable on the upper link 194, and upper link 194 is separated from the locking plate 186 to open the lid 75.

According to this configuration, since the upper link 194 is separated (i.e., unlocked) from the locking plate 186, the lid disengaging button 121 presses the upper link 194 to separate the upper link 194 from the locking plate 186. Alternatively, the upper link 194 is separated from the locking plate 186, for example, by the actuator without using the lid disengaging button 121, so that the lid 75 can be opened. The lid opening and closing mechanism 182 can be compact, and a degree of freedom in setting the lid opening and closing mechanism 182 can increase. In consequence, an opening and closing operation can be selected in accordance with a vehicle mounted state or a non-vehicle mounted state of the top box 73, a vehicle type or the like, and the usability can be improved.

Furthermore, as shown in Figure 5 and Figure 7, provided is the locking mechanism 183 that locks the top box mounting and removing mechanism 181 and the lid opening and closing mechanism 182, and the locking mechanism 183 operates in a direction (moves in the vehicle width direction) different from an actuating direction of the top box mounting and removing mechanism 181 and the lid opening and closing mechanism 182 (swing in the front-rear direction or move in the front-rear direction).

According to this configuration, the locking mechanism 183 of a simple structure can regulate and lock the operations of the top box mounting and removing mechanism 181 and the lid opening and closing mechanism 182.

Since the locking mechanism 183 described above locks both of the top box mounting and removing mechanism 181 and the lid opening and closing mechanism 182, and the top box mounting and removing mechanism 181 and the lid opening and closing mechanism 182 can be integrally and compactly provided via the locking mechanism 183. Consequently, occupant spaces of the respective mechanisms 181, 182 and 183 in the top box 73 can be decreased, and a storage capacity of the top box 73 can be further increased.

The scope of the invention is defined by the claims.

The present invention is not limited to application to the motorcycle 10, and is also applicable to a saddled vehicle including a vehicle other than the motorcycle 10. Note that the saddled vehicle is a vehicle including a general vehicle to ride across a vehicle body, and including not only the motorcycle (also including a motorbike) but also a three-wheeled vehicle or a four-wheeled vehicle classified as ATV (all-terrain vehicle).

### Reference Sign List

10 motorcycle (a saddled vehicle)
72 rear carrier (a vehicle body)
72A carrier side rear engaging section (a vehicle body side engagement mechanism)
72c inclined surface
73 top box (an additional storage compartment)
75 lid (an opening and closing section)
121 lid disengaging button (an operating section)
122 handle
171A box side rear engaging section (a storage compartment side engagement mechanism)
173 keyhole
174 key
181 top box mounting and removing mechanism (a storage compartment mounting and removing mechanism)
182 lid opening and closing mechanism (an opening and closing mechanism)
186 locking plate (a locking member)
194 upper link (a link member)

## Claims

1. An additional storage compartment structure for a saddled vehicle, the additional storage compartment structure being provided with an additional storage compartment (73) mountable on and removable from a vehicle body (72),
the additional storage compartment structure for saddled vehicle, wherein the additional storage compartment (73) comprises a handle (122) changeable between a stored state and a use state, and a keyhole (173) in which a key (174) is inserted to lock against opening and closing,
the additional storage compartment (73) comprises a storage compartment mounting and removing mechanism (181) that allows mounting on and removing from the vehicle body (72),
the storage compartment mounting and removing mechanism (181) comprises a disengagement operating section (171) that disengages the additional storage compartment (73) from the vehicle body (72),
when the key (174) is inserted in the keyhole (173) and turned, the storage compartment mounting and removing mechanism (181) is unlocked, and when the key (174) is inserted in the keyhole (173) and the key (174) is turned in a direction opposite to an unlocked direction of the storage compartment mounting and removing mechanism (181) in a state where the additional storage compartment (73) is mounted on the vehicle body (72), the storage compartment mounting and removing mechanism (181) is locked
**characterized in that** the keyhole (173) is arranged to be covered with the handle (122) in the stored state and the storage compartment mounting and removing mechanism (181)is provided so that the disengagement operating section (171) is covered with the handle (122) in the stored state from a vehicle rear side.

2. An additional storage compartment structure for a saddled vehicle according to claim 1, **characterized in that** the additional storage compartment (73) comprises an opening and closing mechanism (182), wherein the opening and closing mechanism (182) comprises a locking member (186) that locks an opening and closing section (75) of the additional storage compartment (73) in a closed state, a link member (194) that locks the locking member (186), and an operating section (121) that is abuttable on the link member (194), and the link member (194) is separated from the locking member (186) to open the opening and closing section (75).

## Patentansprüche

1. Zusätzliche Staufachstruktur für ein Grätschsitzfahrzeug, wobei die zusätzliche Staufachstruktur mit einem zusätzlichen Staufach (73) versehen ist, das an eine Fahrzeugkarosserie (72) montierbar ist und davon abgenommen werden kann,
zusätzliche Staufachstruktur für Grätschsitzfahrzeug, wobei das zusätzliche Staufach (73) einen Griff (122) umfasst, der zwischen einem gelagerten Zustand und einem Verwendungszustand umstellbar ist, und ein Schlüsselloch (173), in das ein Schlüssel (174) eingesetzt wird, um gegen Öffnen und Schließen zu verriegeln,
das zusätzliche Staufach (73) einen Staufachmontage- und Abnehmmechanismus (181) umfasst, der das Montieren an und Abnehmen von der Fahrzeugkarosserie (72) erlaubt,
wobei der Staufachmontage- und Abnehmmechanismus (181) einen Ausrückbetätigungsteilabschnitt (171) umfasst, der das zusätzliche Staufach (73) aus der Fahrzeugkarosserie (72) ausrückt,
wenn der Schlüssel (174) in das Schlüsselloch (173) eingefügt und gedreht wird, der Staufachmontage- und Abnehmmechanismus (181) entriegelt wird, und wenn der Schlüssel (174) in das Schlüsselloch (173) eingesetzt und der Schlüssel (174) in einer Richtung entgegengesetzt zu einer Entriegelungsrichtung des Staufachmontage- und Abnehmmechanismus (181) in einem Zustand gedreht wird, in dem das zusätzliche Staufach (73) an die Fahrzeugkarosserie (72) montiert ist, der Staufachmontage- und Abnehmmechanismus (181) verriegelt wird,
**dadurch gekennzeichnet, dass** das Schlüsselloch (173) dazu eingerichtet ist, mit dem Griff (122) in dem verstauten Zustand abgedeckt zu sein, und der Staufachmontage- und Abnehmmechanismus (181) derart bereitgestellt ist, dass der Ausrückbetätigungsteilabschnitt (171) mit dem Griff (122) in dem verstauten Zustand von einer Fahrzeugrückseite abgedeckt ist.

2. Zusätzliche Staufachstruktur für Grätschsitzfahrzeug nach Anspruch 1, **dadurch gekennzeichnet, dass** das zusätzliche Staufach (73) einen Öffnungs- und Schließmechanismus (182) umfasst, wobei der Öffnungs- und Schließmechanismus (182) ein Verriegelungselement (186) umfasst, das einen Öffnungs- und Schließteilabschnitt (75) des zusätzlichen Staufachs (73) in einem geschlossenen Zustand verriegelt, ein Verbindungselement (194), das das Verriegelungselement (186) verriegelt, und einen Betätigungsteilabschnitt (121), der auf dem Verbindungselement (194) anschlagbar ist, und wobei das Verbindungselement (194) von dem Verriegelungselement (186) getrennt ist, um den Öffnungs- und Schließteilabschnitt (75) zu öffnen.

## Revendications

1. Structure à compartiment de stockage supplémentaire pour un véhicule à selle, la structure à compartiment de stockage supplémentaire étant pourvue d'un compartiment de stockage supplémentaire (73) pouvant être monté sur et pouvant être retiré d'une carrosserie de véhicule (72),
la structure à compartiment de stockage supplémentaire pour un véhicule à selle, dans laquelle le compartiment de stockage supplémentaire (73) comprend une poignée (122) pouvant être changée entre un état stocké et un état d'utilisation, et un trou de serrure (173) dans lequel une clé (174) est insérée pour verrouiller et empêcher une ouverture et une fermeture,
le compartiment de stockage supplémentaire (73) comprend un mécanisme de montage et de retrait de compartiment de stockage (181) qui permet un montage sur et un retrait de la carrosserie de véhicule (72),
le mécanisme de montage et de retrait de compartiment de stockage (181) comprend une section d'actionnement de désolidarisation (171) qui désolidarise le compartiment de stockage supplémentaire (73) de la carrosserie de véhicule (72),
lorsque la clé (174) est insérée dans le trou de serrure (173) et tournée, le mécanisme de montage et de retrait de compartiment de stockage (181) est déverrouillé, et lorsque la clé (174) est insérée dans le trou de serrure (173) et que la clé (174) est tournée dans une direction opposée à une direction déverrouillée du mécanisme de montage et de retrait de compartiment de stockage (181) dans un état où le compartiment de stockage supplémentaire (73) est monté sur la carrosserie de véhicule (72), le mécanisme de montage et de retrait de compartiment de stockage (181) est verrouillé
**caractérisée en ce que** le trou de serrure (173) est agencé pour être recouvert de la poignée (122) dans l'état stocké et le mécanisme de montage et de retrait de compartiment de stockage (181) est fourni de façon à ce que la section d'actionnement de désolidarisation (171) soit recouverte de la poignée (122) dans l'état stocké à partir d'un côté arrière de véhicule.

2. Structure à compartiment de stockage supplémentaire pour un véhicule à selle selon la revendication 1, **caractérisée en ce que** le compartiment de stockage supplémentaire (73) comprend un mécanisme d'ouverture et de fermeture (182), dans laquelle le mécanisme d'ouverture et de fermeture (182) comprend un élément de verrouillage (186) qui verrouille une section d'ouverture et de fermeture (75) du compartiment de stockage supplémentaire (73) dans un état fermé, un élément de liaison (194) qui verrouille l'élément de verrouillage (186), et une section d'actionnement (121) qui peut venir buter sur l'élément de liaison (194), et l'élément de liaison (194) est séparé de l'élément de verrouillage (186) pour ouvrir la section d'ouverture et de fermeture (75).
